# FASCICULE DE BREVET EUROPEEN

(11) **EP 1 108 854 B1**
(45) Date de publication et mention de la délivrance du brevet: **13.08.2008**
(21) Numéro de dépôt: 00403484.9
(22) Date de dépôt: 12.12.2000
(51) Int. Cl.: E21B 47/08, G01B 7/12, G01B 7/13

(54) **Procédé de contrôle de diamètre de colonnes réalisé par injection**
Verfahren zur Überprüfung des Durchmessers von in Injektionsverfahren hergestellten Säulen
Diameter monitoring method for columns produced by an injection method

(30) Priorité: 14.12.1999 FR 9915732
(43) Date de publication de la demande: 20.06.2001
(73) Titulaire: COMPAGNIE DU SOL, 92000 Nanterre (FR)
(72) Inventeur: Frappin, Pierre, 92000 Nanterre (FR)
(74) Mandataire: Dronne, Guy

(56) Documents cités:
- EP-A- 0 581 686
- EP-A- 0 699 888
- EP-A- 0 863 412
- DE-A- 4 130 339
- DE-C- 19 622 282
- US-A- 4 087 740

## Description

La présente invention a pour objet un procédé de contrôle du diamètre de colonnes réalisées par la technique de l'injection sous pression désignée habituellement par le terme anglo-saxon de ("jet grouting").

Cette technique consiste à forer dans le sol un trou vertical sensiblement cylindrique à l'aide d'un outil qui délivre un ou plusieurs jets de liquide sous pression permettant de réaliser l'installation du sol, le forage ainsi obtenu étant rempli de coulis ou d'un matériau analogue pour obtenir ainsi une colonne qui est moulée dans le forage. Cette technique est notamment décrite dans le brevet français n° 2 700 128.

On comprend que lors de cette opération de forage pour des profondeurs successives, le diamètre effectif de ce forage pourra varier de façon significative selon les irrégularités du sous-sol rencontrées et en particulier selon la nature de ce sous-sol. Il en résulte que la colonne ainsi obtenue peut présenter des différences de diamètre relatives significatives selon la profondeur considérée. Ce problème est d'autant plus aigu que la colonne présente une profondeur importante qui peut atteindre 15 mètres.

Dans certains cas, on réalise une succession de colonnes adjacentes pour constituer ainsi une barrière continue dans le sol. Il est clair que pour ce type d'application, il est particulièrement important de pouvoir contrôler le diamètre de chaque colonne pour différentes profondeurs afin de pouvoir s'assurer de la continuité de la barrière ainsi réalisée sur toute sa hauteur.

Il n'existe actuellement aucun procédé pour contrôler le diamètre des colonnes réalisées par jet de coulis après leur réalisation. La technique utilisée consiste à faire une colonne de tests dont on déterre la partie supérieure afin d'en contrôler visuellement le diamètre. On comprend cependant que cette technique est d'un emploi relativement lourd et de toute manière elle ne permet pas de contrôler le diamètre de la colonne dans sa partie la plus profonde.

En outre, on connaît des techniques pour réaliser des mesures électriques afin de déterminer la nature du sol sur une certaine profondeur. Selon cette technique on installe dans un forage une sonde comportant une succession d'électrodes régulièrement espacées qui servent d'une part d'électrodes de mesure de différence de potentiel et d'autre part d'électrodes d'injection de courant dans le sol.

Les électrodes d'injection de courant créent des lignes de champ électrique dans un volume cylindrique qui entoure le forage et les mesures de différences de potentiel effectuées pour différentes profondeurs dans le forage permettent de déterminer les caractéristiques du sol pour différentes profondeurs par la mesure d'une grandeur physique représentative de la nature de ce sol. Cette grandeur physique est constituée par la résistivité du sol dont la détermination permet d'évaluer la nature de ce sol. Une telle technique est décrite en détail dans le brevet européen 581 686 au nom de la demanderesse.

Un objet de la présente invention est de fournir un procédé de contrôle du diamètre de colonnes réalisées dans le sol par jet grouting qui ne soit pas de type destructif tout en permettant d'effectuer ce contrôle sur la totalité de la profondeur de la colonne réalisée.

Pour atteindre ce but, selon l'invention, le procédé de contrôle du diamètre de colonne réalisé dans le sol par injection sous pression se caractérise en ce qu'il comprend les étapes suivantes :
- on fournit un ensemble de mesure constitué par un élément tubulaire dont la longueur est sensiblement égale à celle de la colonne, ledit élément tubulaire étant équipé d'une pluralité d'électrodes d'émission pour créer un champ électrique et une pluralité d'électrodes de mesure pour mesurer des différences de potentiel crées par ledit champ électrique reliées respectivement à une source d'énergie électrique et à des moyens de mesure de potentiel ;
- on réalise un forage de référence dans le sol à proximité de l'endroit où les colonnes sont réalisées, et on y place ledit ensemble de mesure pour relever des mesures de tension représentatives de caractéristiques physiques du sol pour différentes profondeurs du forage de référence par quoi on obtient une série de mesures de référence pour lesdites profondeurs,
- on fore, dans la colonne à tester un forage axial dont le diamètre est très inférieur à celui de ladite colonne ;
- on introduit ledit ensemble de mesure dans le forage réalisé dans ladite colonne et on effectue des mesures de tension correspondant à différentes profondeurs, par quoi on obtient des mesures effectives de tensions représentatives d'une caractéristique physique liée à ladite colonne et au sol environnant pour différentes profondeurs ; et
- on traite lesdites mesures effectives à l'aide desdites mesures de référence, par quoi on obtient des informations représentatives du diamètre de ladite colonne pour lesdites différentes profondeurs.

On comprend que, selon ce procédé, on réalise d'abord un forage de référence qui est effectué à proximité de l'endroit où les colonnes doivent être fabriquées. On réalise les mesures électriques dans ce forage de référence pour obtenir les grandeurs physiques de référence correspondant aux différentes profondeurs du forage réalisé. Cette profondeur correspondant bien sûr à celle des colonnes à obtenir.

Dans une deuxième étape, après la réalisation effective de la colonne par "jet grouting", on réalise un forage axial dans la colonne réalisée et à l'aide du même appareil de mesure on effectue, à différentes profondeurs du forage, et donc de la colonne, les mesures. Les mesures réalisées ainsi permettent d'obtenir pour chaque profondeur un paramètre physique qui est lié d'une part au diamètre de la colonne à cette profondeur et d'autre part à la portion du sol environnant intéressé par le champ électrique créé. En traitant ces mesures pour chaque profondeur à l'aide des résultats obtenus lors des mesures de référence dans le forage de référence, on peut en déduire les valeurs inhérentes à la seule colonne et donc le diamètre de celle-ci ou du moins une grandeur relative représentative des variations du diamètre de celle-ci.

Selon un premier mode de mise en oeuvre lors du percement du forage axial dans ladite colonne, on mesure pour différentes profondeurs l'inclinaison éventuelle dudit forage par rapport à la verticale, par quoi on obtient une série de mesures d'inclinaison et on corrige les informations représentatives du diamètre de la colonne pour les différentes profondeurs à l'aide desdites mesures d'inclinaison.

Dans ce mode de mise en oeuvre perfectionné, on comprend que l'on tient compte de l'inclinaison possible du forage réalisé dans la colonne préalablement à la mise en place de l'ensemble de mesure. La détermination de l'inclinaison pour les différentes profondeurs de mesure permet de corriger ces mesures et donc de corriger les mesures de diamètre.

Selon un premier mode de mise en oeuvre, le forage axial est réalisé lorsque le matériau servant à réaliser la colonne n'a pas encore pris.

Selon un deuxième mode de mise en oeuvre, le forage axial est réalisé lorsque le matériau servant à réaliser la colonne est au moins partiellement pris.

De préférence, la grandeur physique est la résistivité du sol ou du matériau constituant la colonne et pour traiter lesdites mesures effectives à l'aide desdites mesures de référence, on utilise un logiciel spécifique d'interprétation en trois dimensions de mesures de résistivité obtenues lors des mesures de référence et des mesures de résistivité relatives à la géométrie de la colonne réalisée et du sol environnant.

D'autres caractéristiques et avantages de l'invention apparaîtront mieux à la lecture de la description qui suit de plusieurs modes de mise en oeuvre de l'invention donnés à titre d'exemples non limitatifs. La description se réfère aux figures annexées sur lesquelles :
les figures 1a à 1d illustrent les différentes étapes du procédé de mesure de diamètre des colonnes ;
la figure 2 illustre un premier mode de mise en oeuvre du procédé de mesure ; et
la figure 3 illustre un deuxième mode de mise en oeuvre du procédé, objet de l'invention.

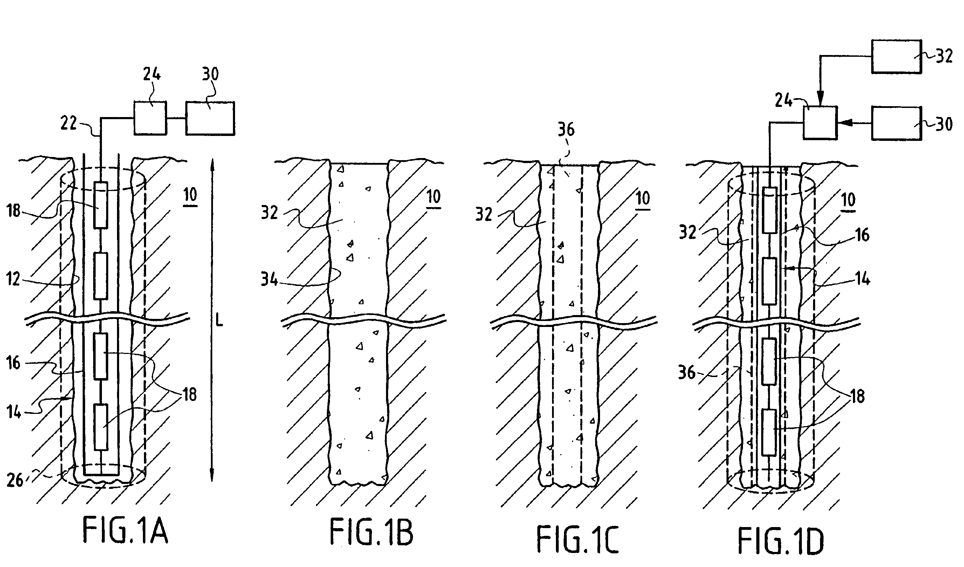

En se référant tout d'abord aux figures 1a à 1d, on va exposer l'ensemble du procédé de mesure du diamètre des colonnes réalisées par jet de coulis en différents points de la hauteur de la colonne.

Dans la première étape illustrée par la figure 1a, on fore dans le sol 10 un trou cylindrique 12 dont la profondeur L est égale à celle des colonnes que l'on veut réaliser. On introduit dans le forage 12 un ensemble de mesure électrique 14 qui est constitué par un ensemble tubulaire 16 à l'intérieur duquel on peut mettre en place un ensemble de sondes 18 constituées essentiellement par des électrodes reliées chacune à des conducteurs électriques 22. Les conducteurs électriques 22 sont connectés à des dispositifs électriques symbolisés par la référence 24 qui comprennent essentiellement des générateurs de courant et des dispositifs de mesure de différence de potentiel. Comme cela est décrit plus en détail dans le brevet européen 581 686 certaines des électrodes sont des électrodes d'injection de courant qui permettent de créer des lignes de champ électrique définissant un cylindre électrique 26 dans le sol, qui est fonction de la position des électrodes d'injection. Les autres électrodes sont des électrodes de mesure de différence de potentiel qui permettent de mesurer la différence de potentiel entre deux points distincts du forage, cette différence de potentiel dépendant à la fois du champ électrique créé et de la résistivité du milieu concerné par le champ électrique créé. On comprend qu'en alimentant successivement des paires d'électrodes d'injection et en effectuant successivement des mesures de différence de potentiel à différents niveaux, on peut dresser une "carte" de la résistivité du sol pour les différentes profondeurs dans le forage 12. Dans l'exemple particulier considéré, on détermine trois couches distinctes de terrain I, II, III correspondant aux résistivités ρ01,ρ02 et ρ03; ces mesures de résistivité associées aux profondeurs correspondant à ces différentes couches sont stockées dans une mémoire 30.

Dans l'étape suivante, on réalise dans le sol 10 par la technique de "jet grouting" une première colonne 32 dont on a représenté en 34 l'interface avec le sol 10. Pour chaque profondeur x, on comprend que le coulis constituant la colonne 32 présente un diamètre de x variable selon la nature du terrain.

Dans l'étape suivante illustrée par la figure 1c, on réalise un forage axial 36 dans la colonne 32. Soit ce forage 32 est réalisé alors que le coulis n'a pas encore pris, auquel cas le forage 36 consiste en une zone axiale dans laquelle le coulis présente une résistance mécanique diminuée. Soit le forage 36 est réalisé après une prise au moins partielle du coulis, le forage 36 consiste alors effectivement en un évidement axial.

Dans l'étape suivante, représentée sur la figure 1d, on met en place dans le forage axial 36 l'instrument de mesure 14 qui a déjà été défini précédemment et qui est constitué essentiellement par son élément tubulaire 16 et par ses électrodes 18 respectivement d'injection de courant et de mesures de différence de potentiel. En alimentant successivement les électrodes d'injection et en effectuant des mesures successives sur les électrodes de mesure, on obtient une mesure de résistivité pour les différentes profondeurs de la colonne où ses mesures ont été réalisées. Chaque mesure de résistivité ρ'0 dépend en fait du diamètre de la colonne, c'est-à-dire de la quantité de coulis concerné par la mesure de différence de potentiel et par la résistivité du sol environnant. On comprend qu'en traitant ces différentes mesures de résistivité ρx en fonction de la profondeur x à l'aide des résistivités de références ρ01, ρ02, p03 dans l'exemple particulier considéré, dans les circuits de calcul 24 on peut en déduire des résistivités utiles correspondant au seul coulis constituant la colonne 32, en fonction de la profondeur x. Cette mesure de résistivité est représentative du diamètre de la colonne à la profondeur considérée. Ce traitement des mesures de résistivité obtenues dans le forage de référence et des mesures de résistivité effectuées pour les différentes profondeurs dans la colonne est réalisé par la mise en oeuvre d'un logiciel spécifique d'interprétation des résistivités apparentes mesurées. Ce logiciel utilise les lois de propagation du courant électrique dans le sol (référence) et dans le sol et dans la colonne (mesures effectuées) en trois dimensions en prenant en compte les paramètres relatifs au sol et au matériau constituant la colonne (couches du sol, épaisseurs de ces couches, résistivités des couches et du matériau de la colonne ...). Dans le brevet mentionné précédemment, le principe de ce traitement appliqué au sol est explicité.

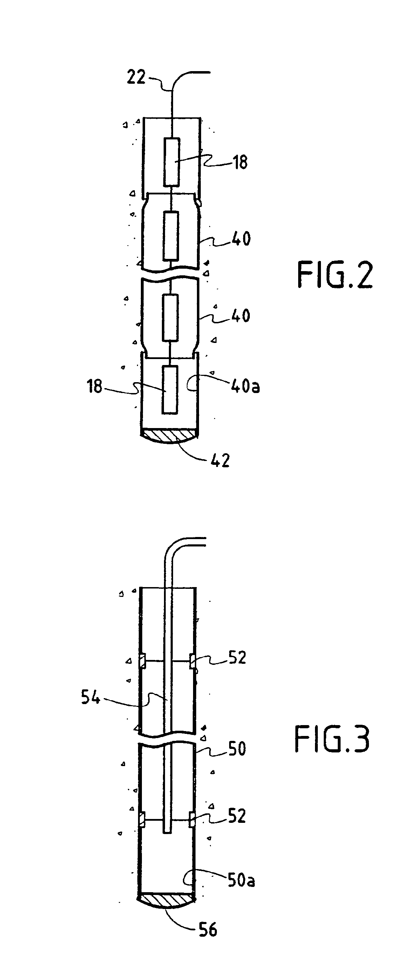

Dans un mode de réalisation perfectionné au moment de la réalisation du forage axial 36, on effectuera de plus une mesure de l'inclinaison éventuelle de ce forage. Pour cela, l'outil de forage est, par exemple, équipé d'un inclinomètre. En effet, lorsque la profondeur L de la colonne est importante, il est difficile d'assurer que le forage axial 36 est effectivement vertical. On comprend qu'en corrigeant les valeurs de résistivité utiles déterminées précédemment avec un coefficient lié à l'inclinaison éventuelle du forage, on peut obtenir avec une plus grande précision le diamètre de la colonne 32 pour les différentes profondeurs x. L'ensemble de mesure peut appartenir à deux types différents respectivement illustrés par les figures 2 et 3.

Dans le cas de la figure 2, l'élément tubulaire de l'ensemble de mesure est constitué par des tubes en matériau plastique perforés 40 qui sont raccordés les uns aux autres pour obtenir un élément tubulaire de longueur convenable. Dans l'élément tubulaire, on peut mettre en place les sondes 18 avec leurs conducteurs électriques 22. Le tube inférieur 40a est obturé par un bouchon 42. Pour faciliter la mise en place de l'élément tubulaire dans le forage axial et pour éviter que des particules ne pénètrent dans l'élément tubulaire par les perforations, on peut disposer autour des tubes 40 une "chaussette" en matériau géotextile. Les sondes peuvent être mises en place dans les tubes 40 avant insertion de l'ensemble dans le forage axial de la colonne.

Les sondes 18 peuvent également être mises en place dans les tubes 40 après que ceux-ci aient été disposés dans le forage axial. Il va de soi qu'un liquide conducteur de l'électricité doit être introduit dans l'élément tubulaire perforé pour assurer la continuité électrique entre les sondes 18 et le matériau constituant la colonne 32.

Dans le cas de la figure 3, l'élément tubulaire de l'ensemble de mesure est constitué par des tubes 50 isolants raccordés entre eux par des manchons conducteurs 52 qui constituent les électrodes. Un ensemble de conducteurs électriques 54 raccorde les différents manchons conducteurs 52 aux installations électriques disposées en surface. Le tube inférieur 50a est équipé d'un bouchon 56.

Un tel dispositif de mesure est décrit plus en détails dans la demande de brevet européen EP 863 412 au nom de la demanderesse.

## Revendications

1. Procédé de contrôle du diamètre de colonnes réalisées dans le sol par injection sous pression **caractérisé en ce qu'**il comprend les étapes suivantes :
- on fournit un ensemble de mesure constitué par un élément tubulaire dont la longueur est sensiblement égale à celle de la colonne, ledit élément tubulaire étant équipé d'une pluralité d'électrodes d'émission pour créer un champ électrique et une pluralité d'électrodes de mesure pour mesurer des différences de potentiel crées par ledit champ électrique reliées respectivement à une source d'énergie électrique et à des moyens de mesure de potentiel ;
- on réalise un forage de référence dans le sol à proximité de l'endroit où les colonnes sont réalisées, et on y place ledit ensemble de mesure pour relever des mesures de tension représentatives de caractéristiques physiques du sol pour différentes profondeurs du forage de référence par quoi on obtient une série de mesures de référence pour lesdites profondeurs,
- on fore, dans la colonne à tester un forage axial dont le diamètre est très inférieur à celui de ladite colonne ;
- on introduit ledit ensemble de mesure dans le forage réalisé dans ladite colonne et on effectue des mesures de tension correspondant à différentes profondeurs, par quoi on obtient des mesures effectives de tensions représentatives d'une caractéristique physique liée à ladite colonne et au sol environnant pour différentes profondeurs ; et
- on traite lesdites mesures effectives à l'aide desdites mesures de référence, par quoi on obtient des informations représentatives du diamètre de ladite colonne pour lesdites différentes profondeurs.

2. Procédé selon la revendication 1, **caractérisé en ce que** lors du percement du forage axial dans ladite colonne on mesure pour différentes profondeurs l'inclinaison éventuelle dudit forage par rapport à la verticale, par quoi on obtient une série de mesures d'inclinaison et on corrige les informations représentatives du diamètre de la colonne pour les différentes profondeurs à l'aide desdites mesures d'inclinaison.

3. Procédé selon l'une quelconque des revendications 1 et 2, **caractérisé en ce que** ledit forage axial est réalisé lorsque le matériau servant à réaliser ladite colonne n'est pas encore pris.

4. Procédé selon l'une quelconque des revendications 1 et 2, **caractérisé en ce que** ledit forage axial est réalisé lorsque le matériau servant à réaliser ladite colonne est au moins partiellement pris.

5. Procédé selon l'une quelconque des revendications 1 à 4, **caractérisé en ce que** l'élément tubulaire dudit ensemble de mesure est constitué par une pluralité de tubes perforés raccordés entre eux, lesdites électrodes étant mises en place dans ledit élément tubulaire, et **en ce qu'**on remplit ledit élément tubulaire d'un liquide conducteur de l'électricité.

6. Procédé selon l'une quelconque des revendications 1 à 4, **caractérisé en ce que** ledit élément tubulaire de l'ensemble de mesure est constitué par une pluralité de tubes assemblés entre eux, réalisés en matériau isolant lesdits tubes étant munis sur leur face externe de zones conductrices annulaires formant lesdites électrodes et **en ce que** des conducteurs électriques sont disposés dans ledit élément tubulaire pour relier lesdites zones annulaires conductrices à ladite source d'alimentation électrique et auxdits moyens de mesure de tension.

7. Procédé selon l'une quelconque des revendications 1 à 6, **caractérisé en ce que** ladite caractéristique physique est la résistivité.

8. Procédé selon la revendication 7, **caractérisé en ce que** pour traiter lesdites mesures effectives à l'aide desdites mesures de référence, on utilise un logiciel spécifique d'interprétation en trois dimensions de mesures de résistivité obtenues lors des mesures de référence et des mesures de résistivité relatives à la géométrie de la colonne réalisée et du sol environnant.

## Claims

1. A method of monitoring the diameter of columns made in the ground by jet grouting, the method being **characterized in that** it comprises the following steps:
· a measuring instrument is provided that is constituted by a tubular element of length substantially equal to that of the column, said tubular element being fitted with a plurality of emission electrodes for creating an electric field and with a plurality of measurement electrodes for measuring potential differences created by said electric field, the electrodes being connected respectively to a source of electricity and to potential measuring means;
· a reference borehole is made in the ground close to the location where the columns are made, and said measuring instrument is placed therein to take voltage measurements representative of the physical characteristics of the ground at different depths of the reference borehole so as to obtain a series of reference measurements for said depths;
· an axial borehole is bored in the column to be tested, with the diameter of the axial borehole being much smaller than the diameter of said column;
· said measuring instrument is inserted into the borehole made in said column and voltage measurements are made corresponding to different depths, thus obtaining actual measurements of voltages representative of a physical characteristic associated with said column and with the surrounding ground at different depths; and
· said actual measurements are processed with reference to said reference measurements so as to obtain information representative of the diameter of said column at said different depths.

2. A method according to claim 1, **characterized in that** while boring the axial borehole in said column, any inclination of said borehole relative to the vertical is measured at different depths so as to obtain a series of inclination measurements, and the information representative of column diameter for the different depths is corrected with the help of said inclination measurements.

3. A method according to claim 1 or 2, **characterized in that** said axial borehole is made when the material for making said column has not yet set.

4. A method according to claim 1 or 2, **characterized in that** said axial borehole is made when the material constituting said column has set, at least partially.

5. A method according to any one of claims 1 to 4, **characterized in that** the tubular element of said measuring instrument is constituted by a plurality of interconnected perforated tubes, said electrodes being placed inside said tubular element, and **in that** said tubular element is filled with an electrically-conductive liquid.

6. A method according to any one of claims 1 to 4, **characterized in that** said tubular element of the measuring instrument is constituted by a plurality of assembled-together tubes made of insulating material, said tubes being provided on their out side faces with annul ar conductive zones forming said electrodes, and **in that** the electrical conductors are disposed inside said tubular element to connect said conductive annular zones to said electrical power supply and to said voltage measuring means.

7. A method according to any one of claims 1 to 6, **characterized in that** said physical characteristic is resistivity.

8. A method according to claim 7, **characterized in that** in order to process said actual measurements with the help of said reference measurements, special software is used for providing a three-dimensianal interpretation of the reference resistivity measurements and of the actual resistivity measurements relating both to the shape of the column and to the surrounding ground.

## Patentansprüche

1. Verfahren zur Überprüfung des Durchmessers von im Boden durch Injektion unter Druck hergestellten Säulen, **dadurch gekennzeichnet, dass** es die folgenden Schritte aufweist:
- man stellt eine Messanordnung bereit, die durch ein rohrförmiges Element gebildet ist, dessen Länge im Wesentlichen gleich derjenigen der Säule ist, wobei das rohrförmige Element mit einer Mehrzahl von Emissionselektroden zur Schaffung eines elektrischen Feldes und einer Mehrzahl Von Messelektroden zur Messung von Potentialunterschieden, die durch das elektrische Feld entstanden sind und die jeweils mit einer elektrischen Energiequelle und Mitteln zur Potentialmessung Verbunden sind, ausgestattet ist;
- man führt eine Referenzbohrung im Boden in der Nähe der Stelle durch, an der die Säulen entstanden sind und man platziert dort die Messanordnung, um Spannungsmessungen durchzuführen, die für die physikalischen Eigenschaften des Bodens in unterschiedlichen Tiefen der Referenzbohrung repräsentativ sind, wodurch man eine Reihe von Referenzmessungen für diese Tiefen erhält;
- man bohrt, in die zu testende Säule, eine Axialbohrung, deren Durchmesser viel kleiner ist als derjenige der Säule;
- man führt die Messanordnung in die in der Säule hergestellte Bohrung ein und führt Spannungsmessungen durch, die verschiedenen Tiefen entsprechen, wodurch man effektive Messungen der Spannung erhält, die für ein mit der Säule und mit dem die Säule in unterschiedlichen Tiefen umgebenden Boden in Beziehung stehendes physikalisches Merkmal charakteristisch sind; und
- man verarbeitet die effektiven Messungen mit Hilfe dieser Refererenzmessungen, wodurch man Informationen erhält, die für den Durchmesser der Säule in den verschiedenen Tiefen repräsentativ sind.

2. Verfahren nach Anspruch 1, **dadurch gekennzeichnet, dass** man während dem axialen Durchbohren der Säule für verschiedene Tiefen die mögliche Neigung der Bohrung bezüglich der Vertikalen misst, wodurch man eine Reihe von Messungen der Neigung erhält und man die Informationen, die für den Durchmesser der Säulen in den verschiedenen Tiefen repräsentativ sind, mittels der Neigungsmessungen korrigiert.

3. Verfahren nach einem der Ansprüche 1 oder 2, **dadurch gekennzeichnet, dass** die axiale Bohrung dann durchgeführt wird, wenn sich das zur Herstellung der Säule dienende Material noch nicht verfestigt hat.

4. Verfahren nach einem der Ansprüche 1 oder 2, **dadurch gekennzeichnet, dass** die axiale Bohrung dann durchgeführt wird, wenn sich das zur Herstellung der Säule dienende Material wenigstens teilweise verfestigt hat.

5. Verfahren nach einem der Ansprüche 1 bis 4, **dadurch gekennzeichnet, dass** das rohrförmige Element der Messanordnung aus einer Vielzahl von untereinander verbundenen, per-forierten Röhren besteht, wobei die Elektroden in dem rohrförmigen Element platziert werden, und dass man das rohrförmige Element mit einer elektrisch leitfähigen Flüssigkeit füllt.

6. Verfahren nach einem der Ansprüche 1 bis 4, **dadurch gekennzeichnet, dass** das rohrförmige Element der Messanordnung aus einer Vielzahl von aus isolierendem Material hergestellten, untereinander verbundenen Röhren besteht, wobei die Röhren auf ihrer Außenseite mit ringförmigen, elektrisch leitfähigen Bereichen, die die Elektroden bilden, ausgestattet sind, und dass elektrische Leiter in dem rohrförmigen Element angebracht sind, um die leitfähigen, ringförmigen Bereiche mit der elektrischen Energiequelle und den Mitteln zur Spannungsmessung zu verbinden.

7. Verfahren nach einem der Ansprüche 1 bis 6, **dadurch gekennzeichnet, dass** das physikalische Merkmal der elektrische Widerstand ist,

8. Verfahren nach Anspruch 7, **dadurch gekennzeichnet, dass** man zur Verarbeitung der effektiven Messungen mit Hilfe der Referenzmessungen, ein spezielles Datenverarbeitungsprogramm zur dreidimensionalen Interpretation von Widerstandsmessungen, die bei den Referenzmessungen erhalten wurden, und von Widerstandsmessungen bezüglich der Geometrie der hergestellten Säule und des umgebenden Bodens, verwendet.
